# EUROPÄISCHE PATENTANMELDUNG

(11) **EP 1 249 468 A2**
(43) Veröffentlichungstag der Anmeldung: **16.10.2002**
(21) Anmeldenummer: 02004729.6
(22) Anmeldetag: 01.03.2002
(51) Int. Cl.: C08J 7/06, C08J 5/12, C08J 7/02

(54) **Selbstreinigende Oberflächen durch hydrophobe Strukturen und Verfahren zu deren Herstellung**

(30) Priorität: 12.04.2001 DE 10118349
(71) Anmelder: Creavis Gesellschaft für Technologie und Innovation mbH, 45772 Marl (DE)
(72) Erfinder: Oles, Markus, Dr., 45525 Hattingen (DE); Nun, Edwin, Dr., 48727 Billerbeck (DE)

(57) **Zusammenfassung**

Die wirtschaftliche Bedeutung von mit selbstreinigenden Oberflächen ausgestatteten Gegenständen nimmt immer mehr zu. Es ist deshalb Ziel der Weiterentwicklungen auf diesem Gebiet, auf einfache Weise selbstreinigende Oberflächen bereitzustellen, die eine bessere selbstreinigende Wirkung aufweisen als die bisher bekannten Oberflächen.

Die vorliegende Erfindung betrifft deshalb ein Verfahren zur Herstellung von selbstreinigende Oberflächen auf Basis von Polymeroberflächen auf denen Partikel fixiert worden sind. Hierbei werden die verwendeten Polymeroberflächen mit einem Lösemittel, welches die Partikel aufweist, behandelt. Durch diese Behandlung werden die Polymeroberflächen angelöst und die Partikel, die nicht angelöst werden, lagern sich auf der angelösten Polymeroberfläche ab. Durch Entfernen / Abdampfen des Lösungsmittels werden die Partikel zumindest teilweise fixiert, da die Polymeroberfläche nach Entfernen des Lösemittels wieder aushärtet und die Partikel teilweise in der Polymeroberfläche stecken bleiben

Durch Anwendung des erfindungsgemäßen Verfahrens können alle Gegenstände, die mit einer Polymeroberfläche ausgestattet werden können, mit einer selbstreinigenden Oberfläche versehen werden.

## Beschreibung

Die vorliegende Erfindung betrifft Oberflächen, die durch Einbringen von hydrophoben, partikulären Systemen in ein Trägermaterial einen guten Selbstreinigungseffekt erhalten. Die Oberflächenenergie dieser Oberflächen ist sehr gering. Die Erfindung beschreibt ein Verfahren, mit dem in Polymeroberflächen die partikulären Systeme ins Bulkmaterial fest eingebunden werden können.

Es ist bekannt, dass zum Erzielen einer guten Selbstreinigung einer technischen Oberfläche die Oberfläche neben einer sehr hydrophoben Oberfläche auch eine gewisse Rauhigkeit aurweisen muss. Geeignete Kombination aus Struktur und Hydrophobie macht es möglich, dass schon geringe Mengen bewegten Wassers auf der Oberfläche haftende Schmutzpartikel mitnehmen und die Oberfläche reinigen (WO 96/04123; US 3 354 022).

Stand der Technik ist gemäß EP 0 933 388, dass für solche selbstreinigenden Oberflächen ein Aspektverhältnis von >1 und eine Oberflächenenergie von weniger als 20 mN/m erforderlich ist. Das Aspektverhältnis ist hierbei definiert als der Quotient von Höhe zur Breite der Struktur. Vorgenannte Kriterien sind in der Natur, beispielsweise im Lotusblatt, realisiert. Die aus einem hydrophoben wachsartigen Material gebildete Oberfläche der Pflanze weist Erhebungen auf, die einige µm voneinander entfernt sind. Wassertropfen kommen im Wesentlichen nur mit diesen Spitzen in Berührung. Solche Wasser abstoßenden Oberflächen werden in der Literatur vielfach beschrieben.

CH-PS-268 258 beschreibt ein Verfahren, bei dem durch Aufbringen von Pulvern wie Kaolin, Talkum, Ton oder Silicagel strukturierte Oberflächen erzeugt werden. Die Pulver werden durch Öle und Harze auf Basis von Organosiliziumverbindungen auf der Oberfläche fixiert (Beispiele 1 bis 6). Diese Patentschrift beschreibt allerdings nicht, wie die Korngrößenverteilung ist und wie die Partikel in die Matrix eingebracht werden.

EP 0 909 747 A1 lehrt ein Verfahren zur Erzeugung einer selbstreinigenden Oberfläche. Die Oberfläche weist hydrophobe Erhebungen mit einer Höhe von 5 bis 200 µm auf. Hergestellt wird eine derartige Oberfläche durch Aufbringen einer Dispersion von Pulverpartikeln und einem inerten Material in einer Siloxan-Lösung und anschließendem Aushärten. Die strukturbildenden Partikel werden also durch ein Hilfsmedium am Substrat fixiert.

Verfahren zur Herstellung strukturierter Oberflächen in Polymeren sind ebenfalls bekannt. Neben der detailgetreuen Abformung dieser Strukturen durch einer Masterstruktur im Spritzguss oder Prägeverfahren sind auch Verfahren bekannt, die das Aufbringen von Partikeln auf eine Oberfläche nutzen wie z.B. in US 5 599 489 beschrieben. Auch dieses Verfahren benutzt wieder eine haftvermittelnde Schicht zwischen Partikeln und Bulkmaterial. Zur Ausbildung der Strukturen eignen sich Ätz- und Beschichtungsverfahren zum Aufkleben der strukturbildenden Pulver sowie Formgebungsverfahren unter Einsatz entsprechend strukturierter Negativformen.

All diese Verfahren haben aber gemeinsam, dass beim Aufbringen von partikulären Systemen ein Haftvermittler zwischen Träger und Partikelsystem eingesetzt wird. Die Verwendung eines solchen Haftvermittlers weist viele technische Probleme auf. Zum Einen tauchen die Partikel häufig im Haftvermittler ab und sind so für den gewünschten Effekt verloren. Zum Anderen lassen sich technisch nur sehr wenige Systeme finden, die ein hydrophobes Primärteilchen abbrasionsstabil einbinden.

Aufgabe der vorliegenden Erfindung war es daher, ein Verfahren zu beschreiben, mit dem partikuläre Systeme bzw. Partikel ohne Haftvermittler in verschiedene Polymere an der Oberfläche eingebunden werden können.

Überraschenderweise wurde gefunden, dass durch kurzes Eintauchen bzw. Behandeln von Polymerflächen in/mit Lösungsmittel, welche Partikel der gewünschten Größe aufweisen, die oberste Schicht der Polymere angelöst werden und sich die im Lösungsmittel befindlichen Partikel mit der Oberfläche der Polymeren fest verbinden. Nach dem Abdampfen/Abtrocknen des Lösungsmittels von der Oberfläche sind die partikulären Systeme (also die Partikel) fest an der Oberfläche des Materials verankert.

Gegenstand der vorliegenden Erfindung ist deshalb ein Verfahren gemäß Anspruch 1 zur Herstellung von selbstreinigenden Oberflächen, bei dem eine geeignete, zumindest teilweise hydrophobe Oberflächenstruktur durch Fixieren von Partikeln auf einer Polymeroberfläche geschaffen wird, welches dadurch gekennzeichnet ist, dass zumindest ein Lösemittel, welches die Partikel aufweist und welches die Polymeroberfläche anlöst, auf die Polymeroberfläche aufgebracht wird und durch Entfernen des Lösemittels ein Teil der Partikel an der Polymeroberfläche fixiert wird.

Ebenfalls Gegenstand der vorliegenden Erfindung ist eine selbstreinigende Polymeroberfläche, hergestellt nach einem Verfahren gemäß zumindest einem der Ansprüche 1 bis 16, die eine künstliche, zumindest teilweise hydrophobe Oberflächenstruktur aus Erhebungen und Vertiefungen aufweist, welche dadurch gekennzeichnet ist, dass die Erhebungen und Vertiefungen durch an der Polymeroberfläche fixierte Partikel gebildet werden.

Das erfindungsgemäße Verfahren hat den Vorteil, dass die Partikel direkt in eine Polymeroberfläche eingebunden werden können und nicht über ein Hilfsmittel, wie z.B. einen Kleber, an eine Oberfläche fixiert werden müssen. Auf diese Weise können Oberflächen mit selbstreinigenden Eigenschaften ausgestattet werden, ohne dass Unverträglichkeiten von Oberfläche und verwendetem Hilfsmittel beachtet werden müssen.

Das erfindungsgemäße Verfahren zur Herstellung von selbstreinigenden Oberflächen, bei dem eine geeignete, zumindest teilweise hydrophobe Oberflächenstruktur durch Fixieren von Partikeln auf einer Polymeroberfläche geschaffen wird, basiert vermutlich darauf, dass zumindest ein Lösemittel, welches die Partikel aufweist und welches die Polymeroberfläche anlöst, auf die Polymeroberfläche aufgebracht wird und durch Entfernen des Lösemittels ein Teil der Partikel an der Polymeroberfläche fixiert wird. Durch das Anlösen der Polymeroberfläche wird diese weich und die Partikel können in die angelöste Oberfläche zumindest teilweise einsinken. Nach dem Entfernen des Lösemittels härtet die Polymeroberfläche wieder aus und die Partikel, die zumindest teilweise in die Polymeroberfläche eingesunken sind, sind an der Polymeroberfläche fixiert.

Als Partikel können Partikel eingesetzt werden, die zumindest ein Material, ausgewählt aus Silikaten, dotierten oder pyrogenen Silikaten, Mineralien, Metalloxiden, Kieselsäuren oder Polymeren aufweisen. Vorzugsweise werden Partikel eingesetzt, die einen Partikeldurchmesser von 0,02 bis 100 µm, besonders bevorzugt von 0,2 bis 50 µm und ganz besonders bevorzugt von 0,3 bis 30 µm aurweisen. Die selbstreinigenden Oberflächen weisen die einzelnen Partikel auf der Oberfläche in Abständen von 0 - 10 Partikeldurchmesser, insbesondere von 2 - 3 Partikeldurchmesser, auf.

Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden. Als Partikel können auch solche eingesetzt werden, die sich aus Primärteilchen zu Agglomeraten oder Aggregaten mit einer Größe von 0,2 - 100 µm zusammenlagern.

Es kann vorteilhaft sein, wenn die eingesetzten Partikel eine strukturierte Oberfläche haben. Vorzugsweise werden Partikel, die eine unregelmäßige Feinstruktur im Nanometerbereich auf der Oberfläche aufweisen, eingesetzt. Die Feinstruktur der Partikel ist vorzugsweise eine zerklüftete Struktur mit Erhebungen und/oder Vertiefungen im Nanometerbereich. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm.

Als Partikel, insbesondere als Partikel, die eine unregelmäßige Feinstruktur im Nanometerbereich an der Oberfläche aufweisen, werden vorzugsweise solche Partikel eingesetzt, die zumindest eine Verbindung, ausgewählt aus pyrogener Kieselsäure, Aluminiumoxid, Siliziumoxid, pyrogenen Silikaten oder pulverförmige Polymeren aufweisen. Es kann vorteilhaft sein, wenn die eingesetzten Partikel hydrophobe Eigenschaften aufweisen. Ganz besonders eignen sich als Partikel unter anderem hydrophobierte pyrogene Kieselsäuren, so genannte Aerosile.

Die hydrophoben Eigenschaften der Partikel können durch das verwendete Material der Partikel inhärent vorhanden sein. Es können aber auch hydrophobierte Partikel eingesetzt werden, die z.B. durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, hydrophobe Eigenschaften aurweisen.

Ebenso ist es im Rahmen des erfindungsgemäßen Verfahrens möglich, dass die Partikel nach dem Fixieren auf dem Träger mit hydrophoben Eigenschaften ausgestattet werden. Auch in diesem Fall werden die Partikel vorzugsweise durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane mit hydrophoben Eigenschaften ausgestattet.

Das Lösemittel, welches die Partikel aufweist, weist diese vorzugsweise in suspendierter Form auf. Als Lösemittel können alle Lösemittel eingesetzt werden, die in der Lage sind das entsprechende Polymer, welches die Polymeroberfläche aufweist, anzulösen. Als Lösemittel für diese Anwendungen eignen sich prinzipiell alle Lösemittel für die jeweiligen Polymere. Eine endliche, aber nicht abschließende Auflistung findet sich beispielsweise in Polymer Handbook, Second Edition; J. Brandrup, E.H. Immergut; im Kapitel IV, Solvents and Non-Solvents for Polymers. Hier sind auch weitere, unten nicht aufgelistete Polymere und deren Lösemittel genannt, die ebenfalls Gegenstand der Erfindung sein sollen.

Als Lösemittel wird vorzugsweise zumindest eine als Lösemittel für das entsprechende Polymer geeignete Verbindung aus der Gruppe der Alkohole, der Glykole, der Ether, der Glykolether, der Ketone, der Ester, der Amide, der aliphatischen Kohlenwasserstoffe, der aromatischen Kohlenwasserstoffe, der Nitro-Verbindungen und/oder der Halogenkohlenwasserstoffe oder eine Mischung von einer oder mehrerer dieser Verbindungen eingesetzt. Ganz besonders bevorzugt wird als Lösemittel zumindest eine als Lösemittel für das entsprechende Polymer geeignete Verbindung ausgewählt aus Methanol, Ethanol, Propanol, Butanol, Octanol, Cyclohexanol, Phenol, Kresol, Ethylenglykol, Diethylenglykol, Diethylether, Dibutylether, Anisol, Dioxan, Dioxolan, Tetrahydrofuran, Monoethylenglykolether, Diethylenglykolether, Triethylenglykolether, Polyethylenglykolether, Aceton, Butanon, Cyclohexanon, Essigsäureester (Ethylacetat), Butylacetat, Iso-Amylacetat, Ethylhexylacetat, Glykolester, Dimethylformamid, Pyridin, N-Methylpyrrolidon, N-Methylcaprtolacton, Acetonitril, Schwefelkohlenstoff, Dimethylsulfoxid, Sulfolan, Nitrobenzol, Dichlormethan, Chloroform, Tetrachlormethan, Trichlorthen, Tetrachlorethen, 1,2-Dichlorethan, Chlorphenol, Chlorfluorkohlenstoffen, Benzine, Petrolether, Cyclohexan, Methylcyclohexan, Decalin, Tetralin, Terpene, Benzol, Toluol und/oder Xylol oder eine Mischung aus zwei oder mehreren dieser als Lösemittel geeigneten Verbindungen eingesetzt.

Durch die Verwendung der verschiedenen Lösemittel kann nahezu jedes Polymer als Polymeroberfläche verwendet werden. Entscheidend bei der Auswahl des Lösemittels ist es, dass das partikuläre System vom Lösemittel nicht angegriffen wird, das Polymersystem hingegen angelöst wird.

Die Polymeroberfläche kann durch die verschiedensten gebräuchlichen Polymere gebildet sein. Vorzugsweise wird als die Polymeroberfläche bildende Polymere zumindest ein Polymer, ausgewählt aus Polycarbonaten, Polyacrylnitrilen, Poly(meth)acrylaten, Polyamiden, PVC, Polyethylenen, Polyalkylentherephthalate, Polypropylenen, Polystyrolen, Polyestern oder Polyethersulfonen, sowie deren Gemische oder Copolymere, deren Monomere auch aus anderen Monomerklassen stammen können, eingesetzt.

Das Lösemittel, welches die Partikel aufweist, kann bei Raumtemperatur auf die Polymeroberfläche aufgebracht werden. In einer besonders bevorzugten Ausführungsart des erfindungsgemäßen Verfahrens wird das Lösemittel, welches die Partikel aufweist, vor dem Aufbringen auf die Polymeroberfläche auf eine Temperatur von -30 bis 300 C, bevorzugt 25 bis 100 °C, vorzugsweise auf eine Temperatur von 50 bis 85 °C, erwärmt.

Das Aufbringen des die Partikel aufweisenden Lösemittels auf die Polymeroberfläche kann z.B. durch Aufsprühen, Aufrakeln, Auftropfen oder durch Eintauchen der Polymeroberfläche in das die Partikel aufweisende Lösemittel erfolgen.

Durch die Konzentration an Partikeln im Lösemittel und die Temperatur des Lösemittels sowie durch die Eintauchzeit kann die Anzahl der auf die Oberfläche eingebrachten Teilchen reguliert werden. Hierbei gilt, je länger die Kontaktzeit und je geeigneter das Lösemittel ist, je mehr Teilchen werden in das Polymer eingebracht. Nachteil einer langen Kontaktzeit ist allerdings, dass nicht nur die oberste Schicht des Polymers angelöst wird, sondern auch tiefere Polymerschichten angelöst, beziehungsweise angequollen werden. Hierdurch kann es ungewollt zur vollständigen Zerstörung des Polymers kommen. Ebenso ist eine Dimensionsänderung der polymeren Formteile möglich. Als besonders geeignet haben sich folgende Parameter erwiesen. Vorzugsweise weist das Lösemittel die Primärteilchen in einer Konzentration von 0,1 bis 20 Gew.-%, besonders bevorzugt in einer Konzentration von 1 bis 12 Gew.-% und ganz besonders bevorzugt in einer Konzentration von 1 bis 7 Gew.-% auf. Die Kontaktzeiten sind stark abhängig vom Lösemittel und der Temperatur. Vorzugsweise liegt die Kontaktzeit bei 1 sec. bis 75 min., besonders bevorzugt bei 1 sec. bis 1 min. und ganz besonders bevorzugt bei 1 sec. bis 10 sec. Um aber die äußere Geometrie des polymeren Formkörpers nicht zu verzerren, haben sich kurze Kontaktzeiten und ggf. mehrmaliges Eintauchen des Probenkörpers bewährt. Mit einem Ultraschallbad können die agglomerierten Partikel deagglomeriert und durch ständiges Rühren die Partikel in Schwebe gehalten werden.

Durch das erfindungsgemäße Verfahren können selbstreinigende Polymeroberfläche hergestellt werden, die eine künstliche, zumindest teilweise hydrophobe Oberflächenstruktur aus Erhebungen und Vertiefungen aufweist, die sich dadurch auszeichnen, dass die Erhebungen und Vertiefungen durch an der Polymeroberfläche fixierte Partikel gebildet werden.

Die erfindungsgemäßen selbstreinigenden Polymeroberflächen weisen Partikel eines Materials, ausgewählt aus Silikaten, dotierten Silikaten, Mineralien, Metalloxiden, Kieselsäuren, pyrogenen Kieselsäuren, Fällungskieselsäuren, Metallpulvern oder Polymeren auf. Ebenso weisen die Polymeroberflächen zumindest ein Polymer, ausgewählt aus Polycarbonaten, Poly(meth) acrylaten, Polyamiden, PVC, Polyethylenen, Polypropylenen, Polystyrolen, Polyestern oder Polyethersulfonen, oder deren Gemische oder Copolymere, auf. Die Partikel, die an der Polymeroberfläche fixiert sind, weisen vorzugsweise einen mittleren Partikeldurchmesser von 0,02 bis 100 µm, vorzugsweise von 0,2 bis 50 µm und besonders bevorzugt von 0,1 bis 30 µm auf. Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden.

In einer ganz besonders bevorzugten Ausführungsform der erfindungsgemäßen selbstreinigenden Polymeroberfläche weist diese Partikel auf, die eine unregelmäßige Feinstruktur im Nanometerbereich auf der Oberfläche aufweisen. Durch das Vorhandensein einer Feinstruktur im Nanometerbereich auf der Oberfläche der Partikel wird eine besonders gute selbstreinigende Wirkung erzielt, da der Abstand der Erhebungen und Vertiefungen sich nicht allein aus dem Abstand der Partikel und damit der Partikelgröße ergibt, sondern auch durch die Abstände der Erhöhungen und Vertiefungen auf den Partikeln.

Vorzugsweise weisen die Partikel auf der erfindungsgemäßen Polymeroberfläche hydrophobe Eigenschaften auf. Durch die Hydrophobie der Polymeroberfläche bzw. der Partikel wird eine zumindest teilweise hydrophobe Oberflächenstruktur erzielt, durch die die selbstreinigende Wirkung der Oberflächen gezielt erhöht werden kann, da Verunreinigungen auf der Oberfläche durch geringe Mengen von Wasser entfernt werden können bzw. durch Regen automatisch (Selbstreinigunsgeffekt) entfernt werden.

Mittels des erfindungsgemäßen Verfahrens lassen sich Gegenstände mit einer selbstreinigenden Oberfläche herstellen. Diese Gegenstände sind durch Beschichten des Gegenstands mit zumindest einem Polymer um eine Polymeroberfläche zu erhalten und anschließendes Fixieren von Partikeln an dieser Polymeroberfläche mittels eines Verfahrens gemäß zumindest einem der Ansprüche 1 bis 16 erhältlich.

### Beispiel 1: Selbstreinigende Oberfläche auf Basis einer Polypropylenoberfläche

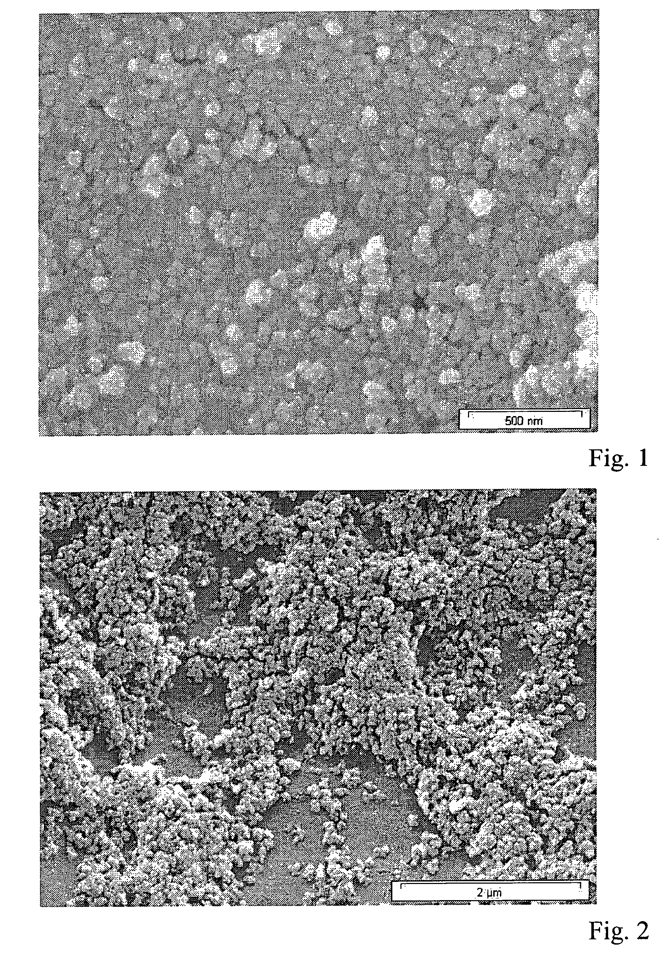

Decalin wird auf eine Temperatur von 80 °C geheizt. Das Decalin enthält 3 Gew.-% pyrogener Kieselsäure (Aerosil R 8200, Degussa AG). Aerosil R 8200 ist ein hydrophobes Aerosil mit einer Primärteilchengrößenverteilung von ca. 5 bis 50 µm. Mit einem Ultraschallbad werden agglomerierte Teilchen deagglomeriert. Die Lösung wird unter ständigem Rühren gehalten. Eine Polypropylenplatte der Größe 5 x 5 cm wird in die Suspension für ca. 3 sec. getaucht. Nach dem Abtrocknen des Lösemittels wird die Platte ein zweites Mal in die Suspension für 3 sec. getaucht. Fig. 1 zeigt die so erzeugte selbstreinigende Lotus-Oberfläche. Auf der rasterelektronenmikroskopischen Aufnahme (REM) ist klar erkennbar, dass die Teilchen in die Polymermatrix eingebunden wurden. Die so erzeugte Oberfläche ist in der Chemikalien-Beständigkeit von der des Polypropylens nicht zu unterscheiden und zeigt einen sehr guten Lotuseffekt. Wassertropfen rollen schon bei einem Winkel von weniger als 4 ° selbständig ab und bei einer Verschmutzung der Oberfläche mit Ruß reichen schon geringste Mengen Wasser aus, um die Oberfläche wieder vollständig vom Ruß zu befreien.

### Beispiel 2: Selbstreinigende Oberfläche auf Basis einer Polyesteroberfläche

In heißem Dimethylsulfoxid (DMSO) werden 3 Gew.-% pyrogene Kieselsäure (Aerosil R 8200, Degussa AG) suspendiert. Eine handelsübliche 5 x 5 cm große Polyesterplatte wird für 5 sec. in diese Lösung getaucht. Fig. 2 zeigt die in das Polyester eingebundenen Primärteilchen. Auch hier wird ein sehr guter Selbstreinigungseffekt (Lotus-Effekt) gefunden. Wassertropfen rollen schon bei einem Winkel von weniger als 14 ° selbständig ab und bei einer Verschmutzung der Oberfläche mit Ruß reichen schon geringste Mengen Wasser aus, um die Oberfläche wieder vollständig vom Ruß zu befreien.

In den Figuren 1 und 2 werden die erfindungsgemäß hergestellten Oberflächen aus den Beispielen dargestellt.

Fig. 1 REM-Aufnahme einer Polypropylenplatte mit Aerosil R 8200, die gemäß Beispiel 1 hergestellt wurde.

Fig. 2 REM-Aufnahme einer Polyesterplatte, die Partikel von pyrogener Kieselsäure aufweist, welche durch Tauchen der Platte in eine die Partikel aufweisende DMSO-Lösung hergestellt wurde.

## Patentansprüche

1. Verfahren zur Herstellung von selbstreinigenden Oberflächen, bei dem eine geeignete zumindest teilweise hydrophobe Oberflächenstruktur durch Fixieren von Partikeln auf einer Polymeroberfläche geschaffen wird,
**dadurch gekennzeichnet,**
**dass** zumindest ein Lösemittel, welches die Partikel aufweist und welches die Polymeroberfläche anlöst, auf die Polymeroberfläche aufgebracht wird und durch Entfernen des Lösemittels ein Teil der Partikel an der Polymeroberfläche fixiert wird.

2. Verfahren gemäß Anspruch 1,
**dadurch gekennzeichnet,**
**dass** Partikel, die zumindest ein Material, ausgewählt aus Silikaten, dotierten Silikaten, Mineralien, Metalloxiden, Kieselsäuren oder Polymeren aufweisen, eingesetzt werden.

3. Verfahren gemäß Anspruch 1 oder 2,
**dadurch gekennzeichnet,**
**dass** die Partikel in dem Lösemittel suspendiert sind.

4. Verfahren gemäß zumindest einem der Ansprüche 1 bis 3,
**dadurch gekennzeichnet,**
**dass** als die Polymeroberfläche bildende Polymere zumindest ein Polymer, ausgewählt aus Polycarbonaten, Polyacrylnitrilen, Poly(meth)acrylaten, Polyamiden, PVC, Polyalkylentherephthalate, Polyethylenen, Polypropylenen, Polystyrolen, Polyestern oder Polyethersulfonen, sowie deren Gemische oder Copolymere, eingesetzt wird.

5. Verfahren gemäß zumindest einem der Ansprüche 1 bis 4,
**dadurch gekennzeichnet,**
**dass** als Lösemittel zumindest eine als Lösemittel für das entsprechende Polymer geeignete Verbindung aus der Gruppe der Alkohole, der Glykole, der Ether, der Glykolether, der Ketone, der Ester, der Amide, der organischen Stickstoff-Verbindungen, der organischen Schwefel-Verbindungen, der Nitro-Verbindungen, der Halogenkohlenwasserstoffe und/oder der Kohlenwasserstoffe oder eine Mischung von einer oder mehrerer dieser Verbindungen eingesetzt wird.

6. Verfahren nach Anspruch 5,
**dadurch gekennzeichnet,**
**dass** als Lösemittel zumindest eine als Lösemittel für das entsprechende Polymer geeignete Verbindung ausgewählt aus Methanol, Ethanol, Propanol, Butanol, Octanol, Cyclohexanol, Phenol, Kresol, Ethylenglykol, Diethylenglykol, Diethylether, Dibutylether, Anisol, Dioxan, Dioxolan, Tetrahydrofuran, Monoethylenglykolether, Diethylenglykolether, Triethylenglykolether, Polyethylenglykolether, Aceton, Butanon, Cyclohexanon, Essigsäureester (Ethylacetat), Butylacetat, Iso-Amylacetat, Ethylhexylacetat, Glykolester, Dimethylformamid, Pyridin, N-Methylpyrrolidon, N-Methylcaprtolacton, Acetonitril, Schwefelkohlenstoff, Dimethylsulfoxid, Sulfolan, Nitrobenzol, Dichlormethan, Chloroform, Tetrachlormethan, Trichlorethen, Tetrachlorethen, 1,2-Dichlorethan, Chlorphenol, Chlorfluorkohlenstoffen, Benzine, Petrolether, Cyclohexan, Methylcyclohexan, Decalin, Tetralin, Terpene, Benzol, Toluol und/oder Xylol oder eine Mischung aus zwei oder mehreren dieser als Lösemittel geeigneten Verbindungen eingesetzt wird.

7. Verfahren gemäß zumindest einem der Ansprüche 1 bis 6,
**dadurch gekennzeichnet,**
**dass** das Lösemittel, welches die Partikel aufweist, vor dem Aufbringen auf die Polymeroberfläche auf eine Temperatur von -30 bis 300 °C, vorzugsweise 25 bis 100 °C erwärmt wird.

8. Verfahren nach Anspruch 7,
**dadurch gekennzeichnet,**
**dass** das Lösemittel, welches die Partikel aufweist, vor dem Aufbringen auf die Polymeroberfläche auf eine Temperatur von 50 bis 85 °C erwärmt wird.

9. Verfahren gemäß Anspruch 2,
**dadurch gekennzeichnet,**
**dass** Partikel, die einen mittleren Partikeldurchmesser von 0,02 bis 100 µm aufweisen, eingesetzt werden.

10. Verfahren gemäß Anspruch 9,
**dadurch gekennzeichnet,**
**dass** Partikel, die einen mittleren Partikeldurchmesser von 0,3 bis 30 µm aufweisen, eingesetzt werden.

11. Verfahren gemäß zumindest einem der Ansprüche 1 bis 10,
**dadurch gekennzeichnet,**
**dass** Partikel, die eine unregelmäßige Feinstruktur im Nanometerbereich auf der Oberfläche aufweisen, eingesetzt werden.

12. Verfahren gemäß zumindest einem der Ansprüche 1 bis 11,
**dadurch gekennzeichnet,**
**dass** Partikel, die zumindest eine Verbindung, ausgewählt aus pyrogener Kieselsäure, Aluminiumoxid, Siliziumoxid, pyrogenen Silikaten oder pulverförmige Polymeren aufweist, eingesetzt werden.

13. Verfahren nach zumindest einem der Ansprüche 1 bis 12,
**dadurch gekennzeichnet,**
**dass** Partikel, die hydrophobe Eigenschaften aufweisen, eingesetzt werden.

14. Verfahren gemäß zumindest einem der Ansprüche 1 bis 13,
**dadurch gekennzeichnet,**
**dass** Partikel eingesetzt werden, die durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, hydrophobe Eigenschaften aufweisen.

15. Verfahren gemäß zumindest einem der Ansprüche 1 bis 12,
**dadurch gekennzeichnet,**
**dass** die Partikel nach dem Fixieren auf dem Träger mit hydrophoben Eigenschaften ausgestattet werden.

16. Verfahren gemäß Anspruch 15,
**dadurch gekennzeichnet,**
**dass** die Partikel durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, mit hydrophoben Eigenschaften ausgestattet werden.

17. Selbstreinigende Polymeroberfläche, hergestellt nach einem Verfahren gemäß zumindest einem der Ansprüche 1 bis 16, die eine künstliche, zumindest teilweise hydrophobe Oberflächenstruktur aus Erhebungen und Vertiefungen aufweist,
**dadurch gekennzeichnet,**
**dass** die Erhebungen und Vertiefungen durch an der Polymeroberfläche fixierte Partikel gebildet werden.

18. Polymeroberfläche gemäß Anspruch 17,
**dadurch gekennzeichnet,**
**dass** Partikel ein Material, ausgewählt aus Silikaten, dotierten Silikaten, Mineralien, Metalloxiden, Kieselsäuren oder Polymeren aufweisen.

19. Polymeroberfläche gemäß einem der Ansprüche 17 oder 18,
**dadurch gekennzeichnet,**
**dass** die Polymeroberfläche zumindest ein Polymer, ausgewählt aus Polycarbonaten, Poly(meth)acrylaten, Polyamiden, PVC, Polyethylenen, Polyalkylentherephthalate, Polypropylenen, Polystyrolen, Polyestern oder Polyethersulfonen, oder deren Gemische oder Copolymere, aufweist.

20. Polymeroberfläche gemäß zumindest einem der Ansprüche 17 bis 19,
**dadurch gekennzeichnet,**
**dass** die Partikel einen mittleren Partikeldurchmesser von 0,02 bis 100 µm aufweisen.

21. Polymeroberfläche gemäß Anspruch 20,
**dadurch gekennzeichnet,**
**dass** die Partikel einen mittleren Partikeldurchmesser von 0,1 bis 30 µm aufweisen.

22. Polymeroberfläche gemäß zumindest einem der Ansprüche 17 bis 21,
**dadurch gekennzeichnet,**
**dass** die Partikel eine unregelmäßige Feinstruktur im Nanometerbereich auf der Oberfläche aufweisen.

23. Polymeroberfläche gemäß zumindest einem der Ansprüche 17 bis 22,
**dadurch gekennzeichnet,**
**dass** die Partikel hydrophobe Eigenschaften aufweisen.

24. Polymeroberfläche gemäß zumindest einem der Ansprüche 17 bis 23,
**dadurch gekennzeichnet,**
**dass** die einzelnen Partikel auf der Oberfläche Abstände von 0 - 10 Partikeldurchmesser, insbesondere von 2 - 3 Partikeldurchmesser, aufweisen.

25. Gegenstände mit einer selbstreinigenden Oberfläche, erhältlich durch Beschichten des Gegenstands mit zumindest einem Polymer um eine Polymeroberfläche zu erhalten und Fixieren von Partikeln an dieser Polymeroberfläche mittels eines Verfahrens gemäß zumindest einem der Ansprüche 1 bis 16.
